# EUROPÄISCHE PATENTSCHRIFT

(11) **EP 2 925 995 B1**
(45) Veröffentlichungstag und Bekanntmachung des Hinweises auf die Patenterteilung: **02.08.2017**
(21) Anmeldenummer: 12809106.3
(22) Anmeldetag: 30.11.2012
(51) Int. Cl.: F02M 21/02, F02M 35/10

(54) **BRENNGASZUMISCHVORRICHTUNG FÜR EINE GASBETRIEBENE BRENNKRAFTMASCHINE**
COMBUSTION GAS ADMIXING DEVICE FOR A GAS-POWERED INTERNAL COMBUSTION ENGINE
DISPOSITIF MÉLANGEUR DE GAZ COMBUSTIBLE POUR UN MOTEUR À COMBUSTION INTERNE FONCTIONNANT AU GAZ

(43) Veröffentlichungstag der Anmeldung: 07.10.2015
(73) Patentinhaber: Nonox B.V., 6433 KC Hoensbroek (NL)
(72) Erfinder: CREMER, Peter-Josef, 4721 Kelmis (BE); KRAEMER, Hans-Peter, 86165 Augsburg (DE)
(74) Vertreter: Kramer Barske Schmidtchen Patentanwälte PartG mbB
(86) Internationale Anmeldenummer: PCT/EP2012/004953
(87) Internationale Veröffentlichungsnummer: WO 2014/082650

(56) Entgegenhaltungen:
- WO-A1-96/35863
- AT-A4- 502 512
- DE-A1- 3 410 909
- DE-A1- 19 528 556
- DE-A1-102006 051 791

## Beschreibung

Die Erfindung betrifft eine Brenngaszumischvorrichtung für eine gasbetriebene Brennkraftmaschine.

Für eine einwandfreie und schadstoffarme Verbrennung gasbetriebener Brennkraftmaschinen ist eine genaue Zumischung des Brenngases zu durch ein Ansaugrohr der Brennkraftmaschine strömender Luft erforderlich.

Aus der AT 502 512 A4 2007-04-15 ist ein als Brenngaseinspritzventil für den Brennraum eines Hubkolben-Gasmotors ausgebildetes Gasdosierventil bekannt, dessen Ventilkörper von einem Elektromagneten betätigt wird und eine Kontur derart hat, dass sich die Querschnittsfläche eines zwischen dem Ventilkörper und einer Durchlassöffnung gebildeten Spaltes linear mit einer Bewegung des Ventilkörpers ändert.

Aus der DE 34 10 909 A1 ist ein Stromventil zur Regelung des Luftmassendurchsatzes bekannt, dessen Ventilkörper eine Mantelfläche bzw. Kontur derart aufweist, dass die Querschnittsfläche eines zwischen dem Ventil und einer Durchlassöffnung bei einer Bewegung des Ventilkörpers in Öffnungsrichtung progressiv zunimmt.

In der US 6,508,418 B1 ist ein Brenngaszumessventil beschrieben, dessen Ventilkörper in einer sphärischen Fläche endet, die in Schließstellung an einer sich konisch verengenden Sitzfläche anliegt. Die DE 600 25090 T2 beschreibt ein diesbezüglich ähnlich ausgebildetes Gaszumessventil.

Die US 7,621,469 B2 beschreibt ein Gaszumessventil, bei dem das Ventilglied als Kugel ausgebildet ist und in Schließstellung an einem sich kegelförmig verengenden Ventilsitz anliegt.

Die US 6,666,193 B2 beschreibt ein Gaszumessventil, dessen Ventilkörper in einer kugeligen Endfläche endet, deren Krümmungsradius gleich dem Krümmungsradius eines Endbereiches einer Sitzfläche ist.

Die DE 10 2006 051 791 A1 beschreibt eine Brennkraftmaschine, die dadurch gekennzeichnet ist, dass im Ansaugkanal eine Lochblende angeordnet ist und ein Injektor gasförmigen Kraftstoff auf die Lochblende abgibt.

Die DE 195 28 556 A1 beschreibt eine Vorrichtung zum Betreiben eines Fahrzeugmotors mit Flüssiggas, das über einen Verdampfer und einen gesondert querschnittsgesteuerten Gasdosierer in eine Ansauganlage eingeführt wird, die dadurch gekennzeichnet ist, dass jedes Saugrohr mit einem Gasdosierer ausgerüstet ist und jeder Gasdosierer zur Lambda-gesteuerten Einstellung des jeweiligen betriebspunktabhängigen Gas-Strömungsquerschnitts ausgerüstet ist. Der Erfindung liegt die Aufgabe zugrunde, eine Brenngaszumischvorrichtung für eine gasbetriebene Brennkraftmaschine zu schaffen, die eine möglichst homogene vorbestimmte Zusammensetzung des einem Brennraum der Brennkraftmaschine zugeführten Brenngasluftgemisches ermöglicht.

Der Anspruch 1 ist auf eine Brenngaszumischvorrichtung zur Lösung der genannten Aufgabe gerichtet. Weiterbildungen sind in den abhängigen Ansprüchen angegeben.

Dadurch, dass bei der erfindungsgemäßen Brennkraftzumischvorrichtung die Brenngasströmung etwa senkrecht zur durch das Ansaugrohr gerichteten Luftströmung in diese einströmt, wird eine gute Mischung beider Strömungen erreicht. Durch die Ausbildung des Auslasses als Schlitz, dessen Längserstreckung etwa
senkrecht zur axialen Richtung des Saugrohrs gerichtet ist, wird erreicht, dass die in das Ansaugrohr eintretende Brenngasströmung die im Ansaugrohr bestehende Strömung möglichst weitgehend durchdringt.

Mit den Merkmalen des Anspruchs 2 wird die Durchmischung weiter verbessert.

Mit den Merkmalen des Anspruchs 3 ist es möglich, das Brenngas bedarfsgerecht zur möglichst genauen Aufrechterhaltung eines vorbestimmten Mischungsverhältnisses, das sich abhängig von der Last der Brennkraftmaschine ändern kann, zuzumischen.

Der Anspruch 4 kennzeichnet eine vorteilhafte Ausführungsform der Führung der Brenngasströmung vor deren Eintritt in das Ansaugrohr.

Die Ansprüche 5 bis 10 kennzeichnen Merkmale der erfindungsgemäßen Brenngaszumischvorrichtung, die für eine genaue Zumischung des Brenngases vorteilhaft sind.

Die Erfindung wird im Folgenden anhand schematischer Zeichnungen eines Ausführungsbeispiels erläutert.

In den Figuren stellen dar:
- Fig.1: einen Schnitt durch eine erfindungsgemäße Brenngaszumischvorrichtung, geschnitten in einer Längsmittelebene des Saugrohrs,
- Fig. 2: einen Schnitt durch die Brenngaszumischvorrichtung im Bereich der Einströmung des Brenngases in das Saugrohr, geschnitten senkrecht zur Längsachse des Saugrohrs,
- Fig. 3: eine perspektivische Ansicht des Einströmbereiches des Brenngases in das Saugrohr bei aufgeschnittenem Saugrohr,
- Fig. 4: eine perspektivische Ansicht des Ventilkörpers, und
- Fig. 5: ein Beispiel für die Abhängigkeit des Brenngasdurchsatzes von der Stellung des Ventilkörpers.

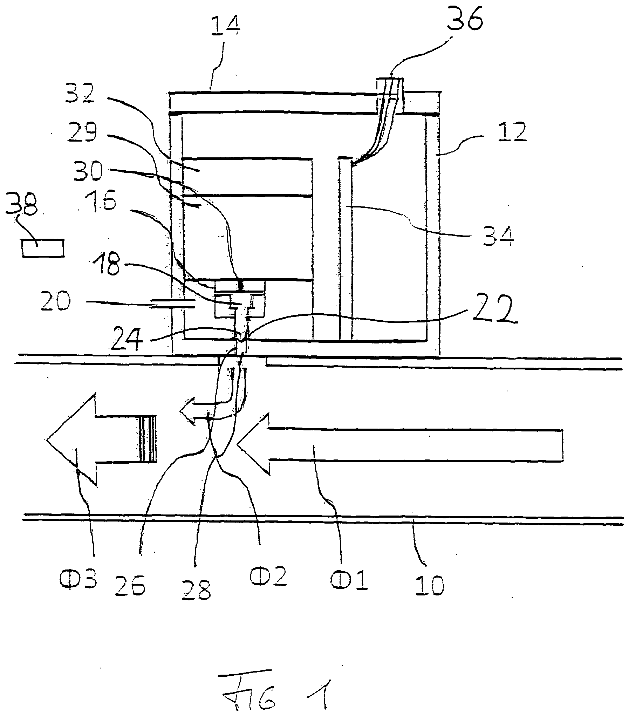

Fig. 1 zeigt eine Schnittansicht einer erfindungsgemäßen Brenngaszumischvorrichtung, geschnitten in einer Längsmittelebene eines Saugrohrs 10 einer nicht dargestellten Brennkraftmaschine. Das Saugrohr 10 kann ein zu einem einzelnen Zylinder der Brennkraftmaschine führendes Saugrohr sein oder ein Ansaugkrümmer, der mit mehreren Zylindern verbunden ist. Durch das Saugrohr 10 strömt beispielsweise eine Frischluftströmung **Φ**₁, die von der Brennkraftmaschine angesaugt sein kann oder die von einem Lader unter Druck gesetzt sein kann. Die Strömung **Φ**₁ kann nur Frischluft enthalten oder beispielsweise zusätzlich Abgas enthalten, das rückgeführt wird.

An dem Saugrohr 10 ist ein Gehäuse 12 der insgesamt mit 14 bezeichneten Brenngaszumischvorrichtung befestigt, beispielsweise mit dem Saugrohr 10 verschraubt. In dem Gehäuse ist ein Führungsbauteil 16 angeordnet, in dem ein Ventilkörper 18 längsbeweglich, im dargestellten Beispiel in senkrechter Richtung, geführt ist. Eine Brenngaszufuhrleitung 20 führt in einen Innenraum des Gehäuses 12. Das Führungsbauteil 16 endet in einer in der Bodenwand des Gehäuses ausgebildeten Durchlassöffnung 22, in die ein Dosierendbereich 24 des Ventilkörpers 18 abhängig von dessen Stellung mehr oder weniger weit einragt. Die Durchlassöffnung 22 ist gemäß Fig. 1 am oberen Ende einer Strömungsleitfläche 26 ausgebildet, die die Durchlassöffnung 22 mit einem in das Saugrohr 10 mündenden Auslass 28 verbindet.

Zum Bewegen des Ventilkörpers 18 dient ein Aktor 29, beispielsweise ein Schrittmotor, dessen Ausgangswelle 30 mit dem Ventilkörper 18 verschraubt ist, so dass sich der Ventilkörper bei einer Drehung der Ausgangswelle linear bewegt. Die Drehstellung der Ausgangswelle 30 kann mit einem Drehstellungsgeber 32 erfasst werden.

In dem Gehäuse 12 ist weiter eine elektronische Steuereinrichtung 34 aufgenommen, der über Leitungen 36 Signale zugeführt werden, wie ein Lastsignal, das die Position eines nicht dargestellten Laststellgliedes zum Einstellen der Last der Brennkraftmaschine anzeigt, das Ausgangssignal des Drehstellungsgebers 32, das Ausgangssignal einer im Abgasstrang (nicht dargestellt) angeordneten Lambdasonde 38, sowie gegebenenfalls weitere Signale, wie die Temperatur der Brennkraftmaschine, der Massenstrom der Saugrohrströmung 41, Druck im Saugrohr 10, usw. Die allgemeinen Funktionen der bisher beschriebenen Funktionsgruppen sind an sich bekannt und werden daher nicht im Einzelnen beschrieben. Die Brenngaszuführleitung 20 ist mit einer Brenngasquelle verbunden, die der Brenngaszuführleitung 20 Brenngas bevorzugt unter konstantem Druck zuführt. Dieses Brenngas 20 wird in einer durch die Stellung des Ventilkörpers 18 und die Druckdifferenz zwischen dem Druck im Saugrohr 10 und dem Druck des Brenngases 20 bestimmten Menge durch den Auslass 28 hindurch als Brenngasströmung **Φ**2 etwa senkrecht zur Richtung der Saugrohrströmung **Φ**1 in diese eingeleitet und von der Saugrohrströmung **Φ**1 unter Mischung umgelenkt, so dass der Brennkraftmaschine eine Mischströmung **Φ**3 zugeleitet wird.

Anhand der nachfolgenden Figuren werden weitere Einzelheiten der erfindungsgemäßen Brenngaszumischvorrichtung erläutert.

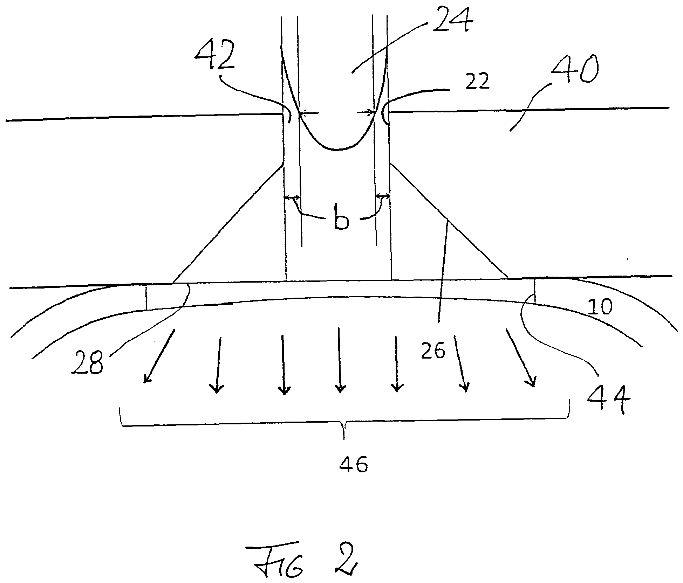

Die Figuren 2 bis 4 zeigen konstruktive Details:

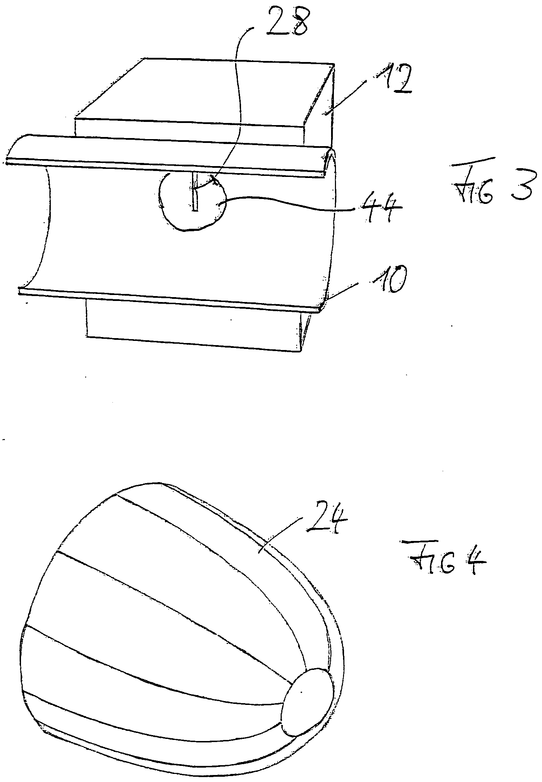

Figur 2 zeigt eine vergrößerte Schnittansicht des Dosierendbereiches 24 des Ventilkörpers 18 (Figur 1) in einer Schnittansicht ähnlich der Figur 1 aber geschnitten senkrecht zur Längsachse des Saugrohrs 10.. Der Dosierendbereich 24 ragt mehr oder weniger weit in die Durchlassöffnung 22 ein, die im dargestellten Beispiel unmittelbar in einer Bodenwand 40 des Gehäuses 12 ausgebildet ist. Die Durchlassöffnung 22 hat einen Abschnitt mit kreiszylindrischem Querschnitt, der über die Strömungsleitfläche 26 in den Auslass 28 übergeht, der in das Saugrohr 10 mündet. Je nach Stellung des Dosierendbereiches 24 relativ zur Durchlassöffnung 22 ist zwischen dem Dosierendbereich 24 und der Durchlassöffnung 22 ein Ringspalt 42 mit einer durch Doppelpfeile angedeuteten Breite b gebildet, durch den das Brenngas einströmt. Die Querschnittsform der in der Darstellung der Figur 2 sich trichterförmig aufweitenden Strömungsleitfläche 26 geht von einem kreisförmigen Querschnitt (geschnitten senkrecht zur Bewegungsrichtung des Ventilkörpers) in einen schlitzförmigen Querschnitt im Bereich des Auslasses 28 über. Figur 3, die eine perspektivische Ansicht auf den Auslass 28 bei aufgeschnittenem Saugrohr 10 darstellt, zeigt den schlitzförmigen Auslass 28, gesehen durch ein Loch 44 in der Wand des Saugrohrs 10. Die Längsrichtung des Schlitzes 28 ist senkrecht zur axialen Richtung des Saugrohrs 10, so dass aufgrund der sich in einer Ebene senkrecht zur axialen Richtung des Saugrohres aufweitenden Strömungsleitfläche 26 das Brenngas in Form eines sich aufweitenden Fächers 46 bzw. Flachstrahls in die Saugrohrströmung **Φ**1 (Figur 1) einströmt, wobei im Wesentlichen der gesamte Querschnitt des Saugrohrs 10 von der Brenngasströmung **Φ**2 erfasst wird und sich eine weitgehend homogen gemischte Mischströmung **Φ**3 ergibt, die in den Brennraum der nicht dargestellten Brennkraftmaschine gelangt. Der schlitzförmige Auslass 28 bildet zusammen mit der Strömungsleitfläche 26 eine Flachstrahldüse.

Die Kontur bzw. Außenfläche des in Figur 4 beispielhaft dargestellten Dosierendbereiches 24 des Ventilkörpers 18 ist derart, dass der durch den Ringspalt 42 gebildete Durchströmquerschnitt für das Brenngas ausgehend von einem minimalen Wert in einer gemäß Figur 2 unteren Endstellung des Ventilkörpers progressiv, vorzugsweise exponentiell, auf einen maximalen Wert zunimmt, der durch die Querschnittsfläche der Durchlassöffnung 22 definiert ist.

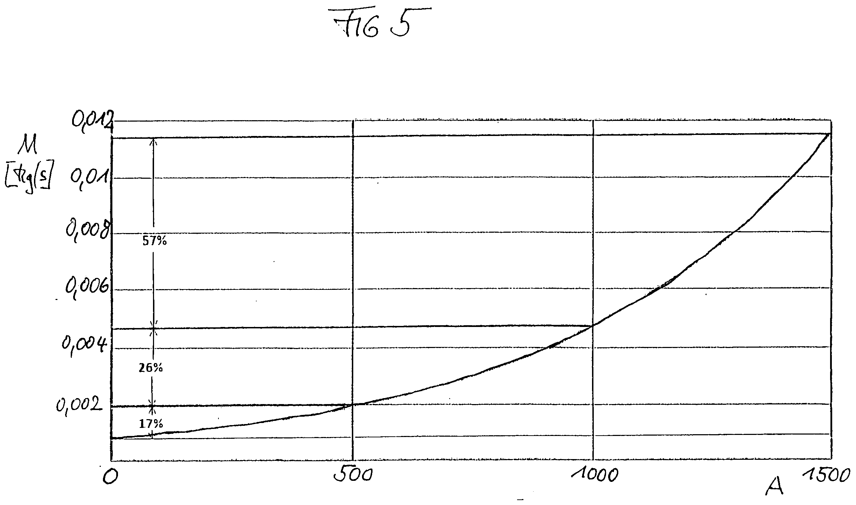

Figur 5 zeigt beispielhaft die Verhältnisse. Auf der Abszisse ist die Anzahl A von Schritten dargestellt, durch die der als Schrittschaltmotor ausgebildete Aktor 29 betätigt wird, wobei bei jedem Schritt der Dosierendbereich 24 aus einer untersten Endstellung gemäß Figur 2 nach oben bewegt wird. A gibt somit auch die Stellung des Ventilkörpers 18 relativ zur Durchlassöffnung 22 in axialer Richtung der Durchlassöffnung an. Der Gesamthub beträgt beispielsweise etwa 8 mm. Die Ordinate gibt den Massenstrom M der Brenngasströmung **Φ**2 in kg/s an. Der Massenstrom M ist proportional zur Breite b des Ringspaltes 42. Sei angenommen, der Massenstrom M erreiche nach 1.500 Schritten einen maximalen Wert. Bei der Ausführungsform gemäß Figur 5 beträgt der Massenstrom nach 1.000 Schritten 43 % des maximalen Wertes und nach 500 Schritten 17 % des maximalen Wertes. Wie ersichtlich, nimmt der Massenstrom M mit zunehmender Verstellung des Ventilkörpers progressiv zu, nämlich während der ersten 500 Schritte von einem Minimalwert auf 17 % des Maximalwertes, nach weiteren 500 Schritten um weitere 26 % auf 43 % des Maximalwertes und nach weiteren 500 Schritten um 57 % auf den Maximalwert.

Bei der Steuerung bzw. Regelung der Zumischung der Brenngasströmung zur Saugrohrströmung sind folgende Kriterien zu erfüllen:
1. Für eine genaue Lambdaregelung, das heißt Regelung des Verhältnisses des Massenstroms der Saugrohrströmung **Φ**1 zum Massenstrom der Brenngasströmung **Φ**2 derart, dass ein vorbestimmter Wert, der von Betriebsparametern der Brennkraftmaschine abhängen kann, eingehalten wird, ist eine hohe Regelungsgüte, das heißt eine kleine Schrittweite, erforderlich.
2. Die Mischströmung **Φ**3 bzw. der Gesamtmassenstrom muss der Lastanforderung an die Brennkraftmaschine, das heißt der Stellung eines Laststellgliedes, wie einer strömungs- oberhalb des Auslasses 28 im Saugrohr 10 angeordneten Drosselklappe, möglichst spontan folgen, das heißt muss innerhalb kurzer Zeit zwischen einem minimalen Wert und einem maximalen Wert veränderbar sein. Der Brenngasmassenstrom muss diesem Gesamtmassenstrom folgen, das heißt ebenfalls innerhalb kurzer Zeit von einem minimalen Wert auf einen maximalen Wert veränderbar sein.

Damit das zweitgenannte Kriterium erfüllt wird, kann der Schrittmotor von der elektronischen Steuereinrichtung 34 gesteuert bei entsprechend rascher Änderung der Lastanforderung beispielsweise innerhalb von 50 ms um 1.500 Schritte bewegt werden, so dass eine rasche Anpassung der Brenngasströmung **Φ**1 an die vom Laststellglied gesteuerte Saugrohrströmung **Φ**2, beispielsweise Frischluftströmung, möglich ist. Die Veränderung der Brenngasströmung in Abhängigkeit von der Saugrohrströmung erfolgt vorzugsweise gesteuert, indem in der elektronischen Steuereinrichtung 34 die Abhängigkeit der Stellung des Ventilkörpers 18 von dem Laststellglied oder dem Ausgangssignal einer im Saugrohr stromoberhalb des Auslasses 28 angeordneten Massenstrommesseinrichtung abgelegt ist. Der beispielsweise als Schrittschaltmotor ausgebildete Aktor 29 stellt den Ventilkörper entsprechend dieser Vorsteuerung ein, wobei die Stellung des Ventilkörpers von dem Drehstellungsgeber 32 erfasst wird. Der Vorsteuerung der Brenngasströmung überlagert erfolgt in der Steuereinrichtung 34 vorzugsweise eine Regelung der Stellung des Ventilkörpers 18 mit Hilfe des Ausgangssignals der Lambdasonde 38. Weicht das Ausgangssignal der Lambdasonde 38 von einem in der elektronischen Steuereinrichtung 34 abrufbaren Sollwert ab, erfolgt eine schrittweise Verstellung des Ventilkörpers 18 derart, dass die Abweichung möglichst auf Null zurückgeht. Damit eine hohe Regelungsgüte erreicht wird, wird die Schrittweite des Schrittschaltmotors bzw. Aktors 29 bei Regelungsbetrieb im Bereich größerer Brenngasmassenströme verringert. Wie aus Figur 5 ersichtlich, führt eine konstante Schrittweite im Bereich großer Brenngasströme zu einer größeren Änderung des Brenngasmassenstroms als bei kleinen Brenngasmassenströmen. Deshalb wird beispielsweise, sobald der Brenngasmassenstrom **Φ**2 mehr als 15 % des maximalen Brenngasmassenstroms beträgt, der Modus des Schrittschaltmotors von einem Ganzschrittmodus auf einen Halbschrittmodus umgeschaltet, indem die Schrittweite des Schrittschaltmotors halbiert wird. Im Bereich noch höherer Brenngasmassenströme, beispielsweise bei Brenngasmassenströmen größer als 50 % des maximalen Stroms kann auf einen Viertelmodus umgeschaltet werden, indem die Schrittweite auf ein Viertel der Schrittweite im Normalmodus vermindert wird. Auf diese Weise lässt sich im Regelbetrieb eine hohe Regelungsgüte erzielen.

Die vorstehend beispielhaft beschriebene Erfindung kann vielfältig abgeändert werden:
Die nichtlineare Abhängigkeit des Querschnitts des Ringspalts 42 von der Stellung des Ventilkörpers 18 kann auch dadurch erzielt werden, dass der Ventilkörper bzw. dessen Dosierendbereich 24 einen konstanten Querschnitt hat und die Durchlassöffnung 22 in axialer Richtung mit unterschiedlichem Querschnitt ausgebildet ist. Die Strömungsleitfläche 26 muss nicht unmittelbar in der Bodenwand 40 des Gehäuses 12 ausgebildet sein, sondern kann durch ein gesondertes Strömungsleitteil gebildet sein, das in dem Auslass 28 endet.

Zur Betätigung des Ventilkörpers 18 können unterschiedlichste Aktoren vorgesehen sein, beispielsweise pneumatische oder hydraulische Aktoren, die vorzugsweise aber nicht zwingend als Schrittschaltaktoren arbeiten.

Die Brenngaszumischvorrichtung ist vorteilhafterweise insgesamt in dem Gehäuse 12 aufgenommen, so dass sie an jedes vorhandene Saugrohr montiert werden kann, wobei das Saugrohr nur mit einem Loch versehen werden muss. Das Saugrohr muss nicht zwingend einen kreisrunden Querschnitt haben.

Der den Auslass bildende Schlitz muss nicht zwangsläufig an einer Strömungsleitfläche ausgebildet sein, die von der Durchlassöffnung bis zum Schlitz führt.

Mit der erfindungsgemäßen Brenngaszumischvorrichtung werden unter anderem folgende Vorteile erzielt:
Das Brenngas kann zwischen Leerlauf und Volllast mit hoher Verstelldynamik verändert werden.

Eine Lambdaregelung kann in jedem Betriebspunkt mit hoher Genauigkeit erfolgen.

Das der Brennkraftmaschine zugeführte brennfähige Gasgemisch weist eine gute Homogenität auf.

Die Vorrichtung ist in einfacher Weise an unterschiedliche Motoren applizierbar, da die Anpassung lediglich über Softwareänderungen erfolgen kann.

Die Vorrichtung vereint vorzugsweise in einfacher, kompatibler Form die Funktionalitäten, Gaszumischung, Gasdosierung zur Frischluft und Gas-/Luftgemischbildung in nur einem Bauteil.

### Bezugszeichenliste

- 10: Saugrohr
- 12: Gehäuse
- 14: Brenngaszumischvorrichtung
- 16: Führungsbauteil
- 18: Ventilkörper
- 20: Brenngaszuführleitung
- 22: Durchlassöffnung
- 24: Dosierendbereich
- 26: Strömungsleitfläche
- 28: Auslass
- 29: Aktor
- 30: Ausgangswelle
- 32: Drehstellungsgeber
- 34: elektronische Steuereinrichtung
- 36: Leitungen
- 38: Lambdasonde
- 40: Bodenwand
- 42: Ringspalt
- 44: Loch
- 46: Fächer
- Φ1: Saugrohrströmung
- Φ2: Brenngasströmung
- Φ3: Gesamtströmung

## Patentansprüche

1. Brenngaszumischvorrichtung für eine gasbetriebene Brennkraftmaschine, enthaltend
ein mit einem Saugrohr (10) der Brennkraftmaschine verbindbares Gehäusebauteil (12) mit einem Einlass zum Anschluss einer Brenngaszuführleitung (20) und einem in das Saugrohr (10) mündenden Auslass (28), der als ein Schlitz ausgebildet ist, dessen Längserstreckung etwa senkrecht zur axialen Richtung des Saugrohrs (10) gerichtet ist, und
einen relativ zu dem Gehäusebauteil (12) beweglichen Ventilkörper (18), zwischen dem und einer Durchlassöffnung (22) des Gehäusebauteils ein Ringspalt (42) gebildet ist, dessen Querschnittsfläche von der Stellung des Ventilkörpers (18) abhängt und der den Durchströmquerschnitt einer Verbindung vom Einlass zum Auslass bestimmt, wobei die Anordnung derart ist, dass eine aus dem Auslass (28) austretende Brenngasströmung etwa senkrecht zu der axialen Richtung des Saugrohrs (10) gerichtet ist.

2. Brenngaszumischvorrichtung nach Anspruch 1, wobei die Brenngasströmung aus dem Auslass (28) in Form eines sich aufweitenden Fächers austritt.

3. Brenngaszumischvorrichtung nach Anspruch 1 oder 2, wobei der Ventilkörper (18) relativ zu einer am Gehäusebauteil (12) ausgebildeten Durchlassöffnung (22) linear in axialer Richtung der Durchlassöffnung (22) beweglich ist und die Außenkontur des Ventilkörpers derart geformt ist, dass sich die Querschnittsfläche eines zwischen der Durchlassöffnung und dem Ventilkörper ausgebildeten Ringspaltes (42) in progressiver Abhängigkeit von der Bewegung des Ventilkörpers ändert.

4. Brenngaszumischvorrichtung nach Anspruch 3, wobei die Durchlassöffnung (22) an einer Strömungsleitfläche (26) ausgebildet ist, die die durch den Ringspalt (42) strömende Strömung zu dem an der Innenumfangsfläche des Saugrohrs (10) angeordneten Auslass (28) führt.

5. Brenngaszumischvorrichtung nach einem der Ansprüche 1 bis 4, enthaltend eine elektronische Steuereinrichtung (34), die einen Aktor (29) des Ventilkörpers (18) derart steuert, dass ein vorbestimmtes Verhältnis zwischen dem Brenngasdurchsatz **Φ**2 und dem Durchsatz des durch das Saugrohr (10) strömenden Gases besteht.

6. Brenngaszumischvorrichtung nach Anspruch 5, wobei der Aktor (29) ein Schrittaktor ist, der den Ventilkörper (18) schrittweise bewegt.

7. Brenngaszumischvorrichtung nach Anspruch 6, wobei die Außenkontur des Ventilkörpers (18) derart geformt ist, dass die Querschnittsfläche eines zwischen der Durchlassöffnung (22) und dem Ventilkörper ausgebildeten Ringspaltes (42) ausgehend von einem minimalen Wert, mit der Bewegung des Ventilkörpers progressiv zu einem maximalen Wert zunimmt.

8. Brenngaszumischvorrichtung nach Anspruch 7, wobei die elektronische Steuereinrichtung (34) mit einem der Stellung eines Laststellgliedes der Brennkraftmaschine entsprechendem Lastsignal und einem von einem Lambdasensor (38) erzeugten Lambdasignal beaufschlagt ist, der Ventilkörper (18) bei Änderung des Lastsignals schrittweise mit einer ersten Schrittweite verändert wird und bei einer Abweichung des Lambdasignals von einem vorbestimmten Wert geregelt mit einer zweiten Schrittweite bewegt wird.

9. Brenngaszumischvorrichtung nach Anspruch 8, wobei die zweite Schrittweite im Bereich kleiner Querschnittsflächen des Ringspaltes (42) gleich der ersten Schrittweite ist und im Bereich großer Querschnittsflächen kleiner als die erste Schrittweite ist.

10. Brenngaszumischvorrichtung nach Anspruch 9, wobei die zweite Schrittweite bei Querschnittsflächen kleiner als 20% der maximalen Querschnittsfläche gleich der ersten Schrittweite ist.

## Claims

1. A combustion gas admixing device for a gas-powered internal combustion engine, comprising
a housing component (12) which is connectable to an intake pipe (10) of the internal combustion engine, the housing component having an inlet for connection to a gaseous fuel supply conduit (20) and an outlet (28) which opens into the intake pipe (10) and is configured as a slit whose longitudinal extension is oriented approximately perpendicular to the axial direction of the intake pipe (10), and
a valve body (18) which is movable relative to the housing component (12), wherein an annular gap (42) is formed between the valve body and an outlet opening (22) of the housing component whose cross-sectional area depends on the position of the valve body (18), the annular gap defining the flow-through cross-section of a passageway between the inlet and the outlet, wherein the arrangement is such that a gaseous fuel flow exhausting from the slit is directed approximately perpendicular to the axial direction of the intake pipe (10).

2. The combustion gas admixing device according to claim 1, wherein the gaseous fuel flow from the outlet (28) exhausts in the shape of a widening fan.

3. The combustion gas admixing device according to claim 1 or 2, wherein the valve body (18) is linearly movable relative to an outlet opening (22) which is formed at the housing component (12) in an axial direction of the outlet opening (22) and the outer contour of the valve body is shaped such that the cross-sectional area of the annular gap (42) formed between the outlet opening and the valve body changes in progressive accordance with the movement of the valve body.

4. The combustion gas admixing device according to claim 3, wherein the outlet opening (22) is formed on a flow guiding surface (26) which guides the flow flowing through the annular gap (42) to the outlet (28) disposed on an inner circumferential surface of the intake pipe (10).

5. The combustion gas admixing device according to any one of claims 1 to 4, comprising an electronic control apparatus (34) which controls an actuator (29) of the valve body (18) such that a predetermined ratio exists between the gaseous fuel flow rate **Φ**2 and the flow rate of the gas flowing through the intake pipe (10).

6. The combustion gas admixing device according to claim 5, wherein the actuator (29) is a step actuator which moves the valve body (18) in a step-wise manner.

7. The combustion gas admixing device according to claim 6, wherein the outer contour of the valve body (18) is shaped such that the cross-sectional area of the annular gap (42) formed between the outlet opening (22) and the valve body progressively increases from a minimal value to a maximal value in accordance with the movement of the valve body.

8. The combustion gas admixing device according to claim 7, wherein the electronic control apparatus (34) receives a load signal representative of a position of a load controlling element of the internal combustion engine and a lambda signal generated by a lambda sensor (38), the valve body (18) is changed in a step-wise manner by a first step width when the load signal changes and, in case the lambda signal deviates from a predetermined value, is moved in a controlled manner by a second step width.

9. The combustion gas admixing device according to claim 8, wherein the second step width is equal to the first step width in the range of small cross-sectional areas of the annular gap (42) and is less than the first step width in the range of large cross-sectional areas.

10. The combustion gas admixing device according to claim 9, wherein the second step width is equal to the first step width for cross-sectional areas smaller than 20% of the maximal cross-sectional area.

## Revendications

1. Dispositif mélangeur de gaz combustible pour un moteur à combustion interne fonctionnant au gaz, contenant
un composant de boîtier (12) pouvant être relié à un tube d'aspiration (10) du moteur à combustion interne avec une entrée pour le raccordement d'une conduite d'alimentation en gaz combustible (20) et une sortie (28) débouchant dans le tube d'aspiration (10) qui est réalisée comme une fente, dont l'étendue longitudinale est dirigée à peu près perpendiculairement au sens axial du tube d'aspiration (10), et
un corps de soupape (18) mobile par rapport au composant de boîtier (12), entre lequel et une ouverture de passage (22) du composant de boîtier est formée une fente annulaire (42), dont l'aire de section dépend de la position du corps de soupape (18) et qui détermine la section transversale de débit d'une liaison d'entrée à la sortie, dans lequel l'agencement est tel qu'un courant de gaz combustible sortant de la sortie (28) est dirigé à peu près perpendiculairement au sens axial du tube d'aspiration (10).

2. Dispositif de mélange de gaz combustible selon la revendication 1, dans lequel le courant de gaz combustible provenant de la sortie (28) sort sous la forme d'un éventail s'élargissant.

3. Dispositif de mélange de gaz combustible selon la revendication 1 ou 2, dans lequel le corps de soupape (18) est mobile par rapport à une ouverture de passage (22) réalisée sur le composant de boîtier (12) de manière linéaire en direction axiale de l'ouverture de passage (22) et le contour extérieur du corps de soupape est formé de telle manière que l'aire de section d'une fente annulaire (42) réalisée entre l'ouverture de passage et le corps de soupape se modifie en fonction progressivement du mouvement du corps de soupape.

4. Dispositif de mélange de gaz combustible selon la revendication 3, dans lequel l'ouverture de passage (22) est réalisée sur une surface de conduite de courant (26) qui mène le courant s'écoulant par la fente annulaire (42) vers la sortie (28) agencée sur la surface périphérique intérieure du tube d'aspiration (10).

5. Dispositif de mélange de gaz combustible selon l'une des revendications 1 à 4, contenant un dispositif de commande électronique (34) qui commande un actionneur (29) du corps de soupape (18) de telle manière qu'un rapport prédéterminé entre le débit de gaz combustible Φ2 et le débit du gaz s'écoulant au travers du tube d'aspiration (10) existe.

6. Dispositif de mélange de gaz combustible selon la revendication 5, dans lequel l'actionneur (29) est un actionneur pas à pas qui déplace progressivement le corps de soupape (18).

7. Dispositif de mélange de gaz combustible selon la revendication 6, dans lequel le contour extérieur du corps de soupape (18) est formé de telle manière que l'aire de section d'une fente annulaire (42) réalisée entre l'ouverture de passage (22) et le corps de soupape augmente à partir d'une valeur minimale avec le mouvement du corps de soupape progressivement à une valeur maximale.

8. Dispositif de mélange de gaz combustible selon la revendication 7, dans lequel le dispositif de commande (34) électronique est sollicité par un signal de charge correspondant à la position d'un organe de réglage de charge du moteur à combustion interne et un signal lambda généré par un capteur lambda (38), le corps de soupape (18) est modifié lors de la modification du signal de charge progressivement avec un premier incrément et est déplacé lors d'une divergence du signal lambda d'une valeur prédéterminée par régulation avec un second incrément.

9. Dispositif de mélange de gaz combustible selon la revendication 8, dans lequel le second incrément dans la zone de plus petites aires de section de la fente annulaire (42) est identique au premier incrément et dans la zone de plus grandes aires de section est inférieure au premier incrément.

10. Dispositif de mélange de gaz combustible selon la revendication 9, dans lequel le second incrément pour des aires de section inférieures à 20 % de l'aire de section maximale est identique au premier incrément.
